# EUROPEAN PATENT APPLICATION

(11) **EP 4 435 697 A1**
(43) Date of publication of application: **25.09.2024**
(21) Application number: 24162759.5
(22) Date of filing: 11.03.2024
(51) Int. Cl.: G06Q 10/10, G06Q 10/30

(54) **CONSERVING SYSTEM RESOURCES USING SMART DOCUMENT RETENTION**

(30) Priority: 21.03.2023 US 202318124190
(71) Applicant: SAP SE, 69190 Walldorf (DE)
(72) Inventor: VENKATARAMA, Kiran, 69190 Walldorf (DE); VERMA, Sudhir, 69190 Walldorf (DE); SINGH, Anupama, 69190 Walldorf (DE); LOHIYA, Ankit, 69190 Walldorf (DE); SHETTY, Raghuraj, 69190 Walldorf (DE); KRITI, Ishita, 69190 Walldorf (DE); KOUL, Rohan, 69190 Walldorf (DE); SARAIYA, Anirudh, 69190 Walldorf (DE); CHATALA, Akhileswara, 69190 Walldorf (DE); DAVE, Suketu, 69190 Walldorf (DE); KUMAR, Rohit, 69190 Walldorf (DE)
(74) Representative: Müller-Boré & Partner Patentanwälte PartG mbB

(57) **Abstract**

Techniques for conserving system resources using smart document retention are disclosed. A computer system may identify a first portion of a plurality of documents as being decision-making documents based on each document in the first portion being scheduled for deletion within a specified period of time, identify a second portion of the plurality of documents as being non-decision-making documents based on each document in the second portion either being scheduled for deletion outside of the specified period of time or having been converted into and stored as a knowledge base document, and determine a corresponding level of similarity between each decision-making document and each non-decision-making document. The computer system may then cause identifications of a subset of the decision-making documents to be displayed on a computing device based on the corresponding level of similarity between each decision-making document in the subset and at least one of the non-decision-making documents.

## Description

### BACKGROUND

Information technology service management (ITSM) systems provide process and workflows that information technology (IT) teams use to provide their services in a company. ITSM systems may use software and tools to manage and track incidents involving IT components. ITSM systems may use ticketing software to allows organizations to resolve their internal IT issues by streamlining the resolution process. The elements they handle, called tickets, provide context about the issues, including details, categories, and any relevant tags. A ticket is a special document or record that represents an incident that requires action from the IT department, and it often contains additional contextual details about the incident. A user having a technical problem or concern may send a ticket to their IT department for help in resolving the issue.

### BRIEF DESCRIPTION OF THE DRAWINGS

Some example embodiments of the present disclosure are illustrated by way of example and not limitation in the figures of the accompanying drawings, in which like reference numbers indicate similar elements.
FIG. 1 is an example network diagram illustrating a system.
FIG. 2 is a block diagram illustrating an example retention system.
FIG. 3 illustrates a table of example levels of similarity between decision-making documents and non-decision-making documents.
FIG. 4 illustrates an example user interface in which identifications of a subset of decision-making documents are displayed.
FIG. 5 illustrates an example user interface in which analytics for the handling of incident documents for a specific product are displayed.
FIG. 6 illustrates an example user interface in which analytics for the handling of incident documents are displayed at a component level.
FIG. 7 is a flowchart illustrating an example method of implementing smart document retention.
FIG. 8 is a flowchart illustrating an example method of causing an identification of a subset of decision-making documents to be displayed on a computing device.
FIG. 9 is a block diagram of an example computer system on which methodologies described herein can be executed.

### DETAILED DESCRIPTION

Example methods and systems of conserving system resources using smart document retention are disclosed. In the following description, for purposes of explanation, numerous specific details are set forth in order to provide a thorough understanding of example embodiments. It will be evident, however, to one skilled in the art that the present embodiments can be practiced without these specific details.

Knowledge or information from older customer incidents may be helpful in solving current and future customer issues. When a ticket is created for an incident, data about the incident may be added to a document for the incident. This data may contain various parts or fields that provide various information relating to the issue involved in the ticket. Examples of such data include, but are not limited to, a description of the incident, a summary of the communications between users involved in creating and resolving the ticket, and attachments included in the communications between the users involved in creating and resolving the ticket.

These documents that include details about older customer incidents may be stored for future reference. However, given that incidents regularly occur, storing the ever-growing number of documents consumes a significant amount of data storage resources, placing a burden on the underlying computer system. In some example embodiments, the documents may be scheduled for deletion from data storage after a specified period of time. For example, each document may be deleted from storage five years after it is created. This automated deletion of documents results in useful relevant information for resolving technical incidents being lost.

In some example embodiments, the documents including details about older customer incidents may be converted into and stored as elements of a knowledge base. A knowledge base is a collection of information that is organized in a way that makes it easy to find and access via a self-serve digital portal. A knowledge base is often used to store and manage information that is related to a specific topic or area of expertise, such as a product or service. In order to avoid excessive consumption of storage space, a human processor may perform a quality check on each document to decide if it should be converted and retained. However, as more and more incidents occur, more and more documents are created, thereby leading to a pile-up of documents awaiting decisions on whether to be converted for long-term storage as knowledge base elements. These decisions become even more important when documents are close to their scheduled deletion date. Furthermore, a lack of relative comparison of documents with one another leads to incorrect decision making on the part of the human processor and may be an obstacle in retaining the relevant knowledge. Other technical challenges may arise as well.

The implementation of the features disclosed herein involves a nongeneric, unconventional, and non-routine operation or combination of operations. By applying one or more of the solutions disclosed herein, some technical effects of the system and method of the present disclosure are to conserve system resources using smart document retention.

In some example embodiments, a computer system may extract knowledge from documents and compute a level of similarity among them by leveraging a micro approach and a macro approach along with capabilities of machine learning to recommend useful unique documents for conversion into long term storage via an intuitive user interface. The micro approach considers documents that are going to get deleted within a specified period of time (e.g., within one year) and transforms them into vectors by extracting relevant features. The macro approach considers a bigger dataset that includes documents identified from the micro approach and documents that are going to be deleted outside of the specified period of time (e.g., not until after one year). In some example embodiments, the bigger dataset of the macro approach may also include knowledge base documents. For example, the bigger dataset of the macro approach may include documents that have already been converted for long term storage (e.g., stored documents that are, based on user-instructed conversion into knowledge base documents, no longer scheduled for deletion). In the macro approach, the feature list from the micro approach may be utilized to compare the features with latest documents (e.g., the documents that are going to be deleted outside of the specified period of time, as well as the stored knowledge base documents) and rank older documents (e.g., the documents that are going to be deleted within the specified period of time).

In some example embodiments, a computer system may identify a first portion of a plurality of documents as being decision-making documents based on each document in the first portion of the plurality of documents being scheduled for deletion from a database within a specified period of time, and identify a second portion of the plurality of documents as being non-decision-making documents based on each document in the second portion of the plurality of documents either being scheduled for deletion from the database outside of the specified period of time or having been converted into a knowledge base document and stored in the database. Next, the computer system may, for each one of the decision-making documents, determine a corresponding level of similarity between the decision-making document and each one of the non-decision-making documents. For example, each decision-making document may be compared with all non-decision-making documents to determine the corresponding levels of similarity between the decision-making document and the non-decision-making documents.

The computer system may then cause identifications of a subset of the decision-making documents to be displayed on a computing device based on the corresponding level of similarity between each decision-making document in the subset and at least one of the non-decision-making documents. In some example embodiments, a subset of the decision-making documents with the highest levels of similarity with the non-decision-making documents may be displayed on the computing device in order to identify to a user the decision-making documents for which review is of low importance since they are not particularly unique. Each document in the remaining subset of the decision-making documents, which includes the decision-making documents with low levels of similarity with the non-decision-making documents, may then be compared with the other documents in the remaining subset of the decision-making documents. Agglomerative clustering may be performed on this remaining subset to form clusters of decision-making documents. A certain portion of decision-making documents in each cluster may be determined to have the highest amount of knowledge within that cluster based on the number of sentences in each decision-making document. For example, the computer system may identify the top 50% of decision-making documents in each cluster having the largest number of sentences as being the top 50% of decision-making documents in the cluster having the highest amount of knowledge in that cluster. The computer system may then display this top portion of decision-making documents on the computing device, while omitting the remaining portion from display, in order to draw the user's attention to the decision-making documents with the most knowledge.

The term "decision-making document" is used herein to refer to a document that is scheduled to be deleted within a specified period of time, since there is urgency for a decision to be made regarding whether to convert the document to long term storage in order to avoid deletion. The term "non-decision-making document" is used herein to refer to a document that is scheduled to be deleted after the specified period of time, since there is no urgency for a decision to be made regarding whether to convert the document to long term storage.

By identifying the documents that are scheduled to be deleted within the specified period of time and prioritizing those documents for analysis as to whether they should be converted for long term storage, the computer system prevents unintended and undesired deletion of useful documents. Furthermore, by comparing the older documents scheduled for deletion within the specified period of time with the newer documents scheduled for deletion outside of the specified period of time, as well as with the already-stored knowledge base documents, to determine the level of similarity between the older documents and the newer documents, the computer system may identify the older documents that contain unique knowledge that is not occurring in high frequency for subsequent capture, thereby increasing the conversion of useful documents for long term storage, while reducing the long term storage of common types of documents that have reoccurred often in recent times. As a result, the effectiveness and efficiency of the computer system involved in document retention is increased. Other technical effects will be apparent from this disclosure as well.

The methods or embodiments disclosed herein may be implemented as a computer system having one or more modules (e.g., hardware modules or software modules). Such modules may be executed by one or more hardware processors of the computer system. In some example embodiments, a non-transitory machine-readable storage device can store a set of instructions that, when executed by at least one processor, causes the at least one processor to perform the operations and method steps discussed within the present disclosure.

The details of one or more variations of the subject matter described herein are set forth in the accompanying drawings and the description below. Other features and benefits of the subject matter described herein will be apparent from the description and drawings, and from the claims.

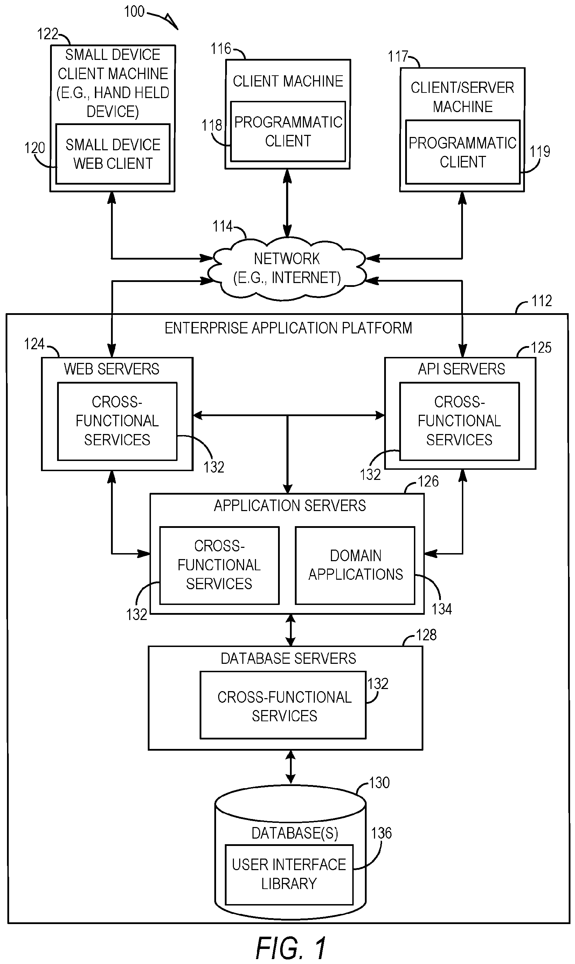

FIG. 1 is an example network diagram illustrating a system 100. A platform (e.g., machines and software), in the example form of an enterprise application platform 112, provides server-side functionality, via a network 114 (e.g., the Internet) to one or more clients. FIG. 1 illustrates, for example, a client machine 116 with programmatic client 118 (e.g., a browser), a small device client machine 122 with a small device web client 120 (e.g., a browser without a script engine), and a client/server machine 117 with a programmatic client 119.

Turning specifically to the enterprise application platform 112, web servers 124 and Application Program Interface (API) servers 125 can be coupled to, and provide web and programmatic interfaces to, application servers 126. The application servers 126 can be, in turn, coupled to one or more database servers 128 that facilitate access to one or more databases 130. The web servers 124, API servers 125, application servers 126, and database servers 128 can host cross-functional services 132. The cross-functional services 132 can include relational database modules to provide support services for access to the database(s) 130, which includes a user interface library 136. The application servers 126 can further host domain applications 134. The web servers 124 and the API servers 125 may be combined.

The cross-functional services 132 provide services to users and processes that utilize the enterprise application platform 112. For instance, the cross-functional services 132 can provide portal services (e.g., web services), database services, and connectivity to the domain applications 134 for users that operate the client machine 116, the client/server machine 117, and the small device client machine 122. In addition, the cross-functional services 132 can provide an environment for delivering enhancements to existing applications and for integrating third-party and legacy applications with existing cross-functional services 132 and domain applications 134. In some example embodiments, the system 100 comprises a client-server system that employs a client-server architecture, as shown in FIG. 1. However, the embodiments of the present disclosure are, of course, not limited to a client-server architecture, and could equally well find application in a distributed, or peer-to-peer, architecture system.

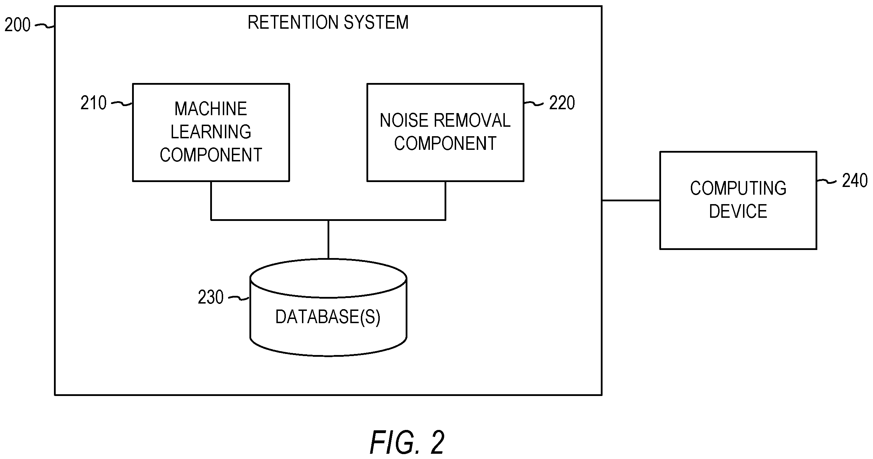

FIG. 2 is a block diagram illustrating an example retention system 200. The components shown in FIG. 2 may be configured to communicate with each other via one or more network connections, such as via the network 114 in FIG. 1. In some example embodiments, the retention system 200 comprises any combination of one or more of a machine learning component 210, a noise removal component 220, and one or more databases 230. One or more of the components of the retention system 200 may be implemented by the enterprise application platform 112 of FIG. 1. For example, the machine learning component 210 and the noise removal component 220 may be incorporated into the application server(s) 126, while the database(s) may be incorporated into the database(s) 130. However, the retention system 200 may be implemented in other ways as well.

In some example embodiments, the machine learning component 210 may be configured to identify a first portion of a plurality of documents as being decision-making documents based on each document in the first portion of the plurality of documents being scheduled for deletion from a database (e.g., the database 230) within a specified period of time. For example, the retention system 200 may access metadata of the document, which may be stored in the database(s) 230 in association with the document, to determine when the document is scheduled for deletion. The metadata may comprise the actual scheduled deletion date or a date that the document was created, which may be used to calculate the scheduled deletion date. If the specified period of time is one month, then the retention system 200 may identify documents scheduled to be deleted within one month as being decision-making documents. Each one of the plurality of documents may correspond to a customer service ticket created for an incident involving an information technology service. Furthermore, each one of the plurality of documents may comprise information used to resolve the incident. However, other configurations of the documents are also within the scope of the present disclosure. For example, although the techniques disclose herein may be used for documents that correspond to customer service tickets created for incidents involving information technology services, these techniques may also be used for other types of documents as well.

The machine learning component 210 may perform feature engineering to detect and extract relevant feature vectors from each decision-making document. For each decision-making document, the machine learning component 210 may split the text of the decision-making document into sentences, and then use an unsupervised learning model trained to generate sentence embeddings for the sentences in the decision-making document. In some example embodiments, Sent2Vec may be used to generate the sentence embeddings for the decision-making documents. However, other models for generating sentence embeddings are also within the scope of the present disclosure.

In some example embodiments, the machine learning component 210 may be configured to identify a second portion of the plurality of documents as being non-decision-making documents based on each document in the second portion of the plurality of documents being scheduled for deletion from the database outside of the specified period of time. For example, if the specified period of time is one month, then the machine learning component 210 may identify documents scheduled to be deleted in more than one month as being non-decision-making documents.

The machine learning component 210 may perform feature engineering to detect and extract relevant feature vectors from each non-decision-making document. For each non-decision-making document, the machine learning component 210 may split the text of the non-decision-making document into sentences, and then use an unsupervised learning model trained to generate sentence embeddings for the sentences in the non-decision-making document. In some example embodiments, Sent2Vec may be used to generate the sentence embeddings for the non-decision-making documents. However, other models for generating sentence embeddings are also within the scope of the present disclosure.

In some example embodiments, the noise removal component 220 may be configured to perform a noise removal process in order to extract knowledge from the decision-making documents and the non-decision-making documents. The noise removal process may be performed before transforming the features of the documents into embeddings, thereby avoiding the computing of embeddings for noise. Knowledge may comprise information about a particular problem in a document which varies across different application components. Any valuable information in documents which helps the human processor to understand the issue and solve similar newer issues may be considered knowledge. Knowledge does not have any specific pattern and it varies hugely across components. Hence, extracting knowledge from documents is very difficult. On the other hand, noise is any text or sentence that does not talk about the problem. Categories of noise include, but are not limited to, greetings (e.g., "Dear colleagues"), handover of the incident (e.g., "please take over"), and system connection (e.g., "connection to production system is not open and access data is not maintained"). These patterns of noise are the same across different components. Other categories of noise are also within the scope of the present disclosure. The knowledge contained within a document may be determined by subtracting the noise contained within the document from the entire text contained within the document.

In some example embodiments, the machine learning component 210 may be configured to build a noise detection model to be used by the noise removal component 220 in removing noise. The machine learning component 210 may first identify the patterns within the noise, such as by identifying the categories within noise which can serve as class labels to generate thresholds to classify any text as noise or knowledge. The machine learning component 210 may use an unsupervised approach to identify the patterns of noise. For example, the machine learning component 210 may perform topic modelling using a Latent Dirichelt allocation (LDA) algorithm and a term frequency-inverse document frequency (TF-IDF) vectorizer to determine a top number of topics (e.g., top seven topics) that will serve as top categories within noise.

The machine learning component 210 may then generate embeddings based on categories of noise during a training phase. The machine learning component 210 may use Sent2Vec as a vectorizer to generate sentence embeddings for all the categories. To understand whether the embedding generated is good, the machine learning component 210 may keep on adding more noise data using manual annotations and calculate training error and validation error at every step. Once these errors reach a saturation point, the embedding generated is good. Other hyperparameters may be tuned as well to find the optimal embeddings for each noise category. The machine learning component 210 may use these embeddings to transform unseen text and calculate similarity scores using cosine similarity. The machine learning component 210 may select the top N% (e.g., the tope 5%) matching sentences and calculate average similarity score for each category of noise. At this point, the machine learning component 210 has different average similarity scores for each category of noise. Each of these different average similarity scores may serve as a threshold to classify an unseen text as noise or knowledge.

In some example embodiments, the noise removal component 220 may use the trained embeddings and threshold scores to predict the unseen data as either noise or knowledge. Since the noise detection model has been trained on noise, any incoming unseen data that has more proximity to noise may be classified as noise. Otherwise, it is classified as knowledge. The noise removal component 220 may take an incoming customer communication summary text data from the document being processed and split the text data into sentences. The noise removal component 220 may perform some pre-processing and remove short sentences to reduce misclassification. The noise removal component 220 may then use the trained embeddings to transform these sentences. Once the transformation is done, the noise removal component 220 may calculate the similarity score between the trained embedded sentence and the sentences being processed to predict whether the sentences being processed are noise or knowledge. Based on the threshold defined for the noise categories, if the similarity score is greater than the threshold, then the noise removal component 220 may classify the sentence as noise. Otherwise, the noise removal component 220 may classify the sentence as knowledge. Once this classification is done, any sentences that are classified as noise may be discarded from further processing by the machine learning component 220 and only the sentences classified as knowledge can be kept for further processing by the machine learning component 210.

In some example embodiments, subsequent to the noise removal process being performed on the decision-making documents and the non-decision-making documents, the machine learning component 210 may, for each one of the decision-making documents, determine a corresponding level of similarity between the decision-making document and each one of the non-decision-making documents. The determining of the corresponding level of similarity between the decision-making document and each one of the non-decision-making documents may comprise determining a corresponding level of similarity between the knowledge text of the decision-making document and the knowledge text of each one of the non-decision-making documents. The determining of the corresponding level of similarity between the decision-making document and each one of the non-decision-making documents may additionally or alternatively comprise computing a cosine similarity between a corresponding embedding of the decision-making document and a corresponding embedding of each one of the non-decision-making documents. However, other types of similarity measurements are also within the scope of the present disclosure.

The machine learning component 210 may be configured to cause identifications of a subset of the decision-making documents to be displayed on a computing device 240 of a user based on the corresponding level of similarity between each decision-making document in the subset and at least one of the non-decision-making documents. In some example embodiments, the machine learning component 210 may, for each one of the decision-making documents, identify a highest level of similarity amongst the levels of similarity between the decision-making document and the non-decision-making documents. The machine learning component 210 may then select the subset of the decision-making documents to display on the computing device 240 based on their highest levels of similarity. In some example embodiments, a subset of the decision-making documents with the highest levels of similarity with the non-decision-making documents may be displayed on the computing device in order to identify to a user the decision-making documents for which review is of low importance since they are not particularly unique. Each document in the remaining subset of the decision-making documents, which includes the decision-making documents with low levels of similarity with the non-decision-making documents, may then be compared with the other documents in the remaining subset of the decision-making documents.

Agglomerative clustering may be performed on this remaining subset to form clusters of decision-making documents. A certain portion of decision-making documents in each cluster may be determined to have the highest amount of knowledge within that cluster based on the number of sentences in each decision-making document. For example, the machine learning component 210 may identify the top 50% of decision-making documents in each cluster having the largest number of sentences as being the top 50% of decision-making documents in the cluster having the highest amount of knowledge in that cluster. The machine learning component 210 may then display this top portion of decision-making documents on the computing device, while omitting the remaining portion from display, in order to draw the user's attention to the decision-making documents with the most knowledge.

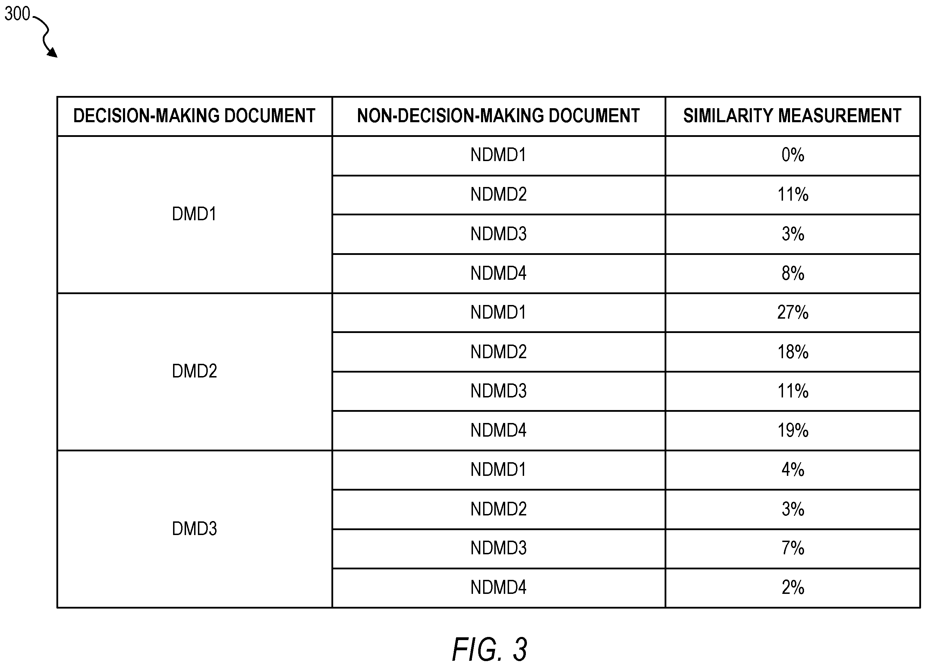

FIG. 3 illustrates a table 300 of example levels of similarity between decision-making documents and non-decision-making documents. In example shown in FIG. 3, the decision-making document DMD1 has a level of similarity of 0% with non-decision-making document NDMD1, a level of similarity of 11% with non-decision-making document NDMD2, a level of similarity of 3% with non-decision-making document NDMD3, and a level of similarity of 8% with non-decision-making document NDMD4. In this example, the highest level of similarity for decision-making document DMD1 is 11% with respect to non-decision-making document NDMD2, so 11% would be used as the highest level of similarity for decision-making document DMD1. Similarly, looking at the table 300, the highest level of similarity for decision-making document DMD2 is 27% with respect to NDMD1, so 27% would be used as the highest level of similarity for decision-making document DMD1, and the highest level of similarity for decision-making document DMD3 is 7% with respect to NDMD3, so 7% would be used as the highest level of similarity for decision-making document DMD3.

In some example embodiments, the machine learning component 210 may be configured to select the subset of the decision-making documents to be displayed by identifying an initial portion of the decision-making documents based on each decision-making document in the initial portion of the decision-making documents having a corresponding highest level of similarity that is within a specified range. The specified range may be configured to identify a level of severity for reviewing a decision-making document for conversion based on a level of uniqueness, and, therefore, usefulness, of the decision-making document. For example, the machine learning component 210 may include decision-making documents in the initial portion based on those decision-making documents having a highest level of similarity between 0-35% in order to include decision-making documents for which review is critical since they are highly unique. Alternatively, the machine learning component 210 may include decision-making documents in the initial portion based on those decision-making documents having a highest level of similarity between 35-55% in order to include decision-making documents for which review is of moderate importance since they are moderately unique. In yet another alternative embodiment, the machine learning component 210 may include decision-making documents in the initial portion based on those decision-making documents having a highest level of similarity between 55-100% in order to include decision-making documents for which review is of low importance since they are not particularly unique.

The machine learning component 210 may be configured to divide the initial portion of the decision-making documents into a plurality of clusters using an agglomerative clustering algorithm. Agglomerative clustering is an unsupervised machine learning technique that divides the population into several clusters such that data points in the same cluster are more similar and data points in different clusters are dissimilar. The agglomerative clustering may be performed using the embeddings of the decision-making documents in the initial portion. The machine learning component 210 may then, for each cluster in the plurality of clusters, rank the decision-making documents in the cluster based on a corresponding total number of sentences for each one of the decision-making documents in the cluster, and, for each cluster in the plurality of clusters, select one or more decision-making documents in the cluster to be included in the subset based on each one of the selected one or more decision-making documents having a total number of sentences greater than a corresponding total number of sentences for each decision-making document in the cluster other than the selected one or more decision-making documents. Since the noise has been removed, the machine learning component 210 may implement the logic that the more sentences in a document, the more knowledge is included in the document. In order to avoid wasteful storage of too many decision-making documents that are part of the same cluster, the machine learning component 210 may only include the documents with the most knowledge in the subset. For example, for each cluster, the machine learning component 210 may select the top 50% of the decision-making documents in the initial portion that have the largest total number of sentences. In some example embodiments, the machine learning component 210 may omit the remaining portion of decision-making documents (e.g., the bottom 50% of the decision-making documents) from inclusion in the subset for display. For example, the machine learning component 210 may exclude the remaining portion of decision-making documents from being displayed in association with the level of severity to which they originally belonged, and display the remaining portion of decision-making documents in association with a lower level of severity, such as by changing the level of severity for the remaining portion of decision-making documents from critical to low.

The retention system 200 may use a single sign-on authentication method to authorize a user of the computing device 240 to use certain functions of the retention system 200. Based on the role given to the user, the retention system 200 may lead the user to corresponding functions, such as a particular portal, page, or user interface. Two examples of user roles include processor and product owner. Other types of roles are also within the scope of the present disclosure. Every user accessing the retention system 200 may be directed to a particular section of functions of the retention system 200 based on the role assigned to that user.

In a processor section, the retention system 200 may be configured to present the documents of a user, with each document categorized according to the severity that is determined based on the level of similarity for the document. The user may then navigate to the document to review and take necessary action. The process section may also provide a corresponding match percentage for each document, which enables the user to evaluate the level of similarity to help in making the right decision regarding whether to convert the document to long term storage or to cause or allow the document to be deleted.

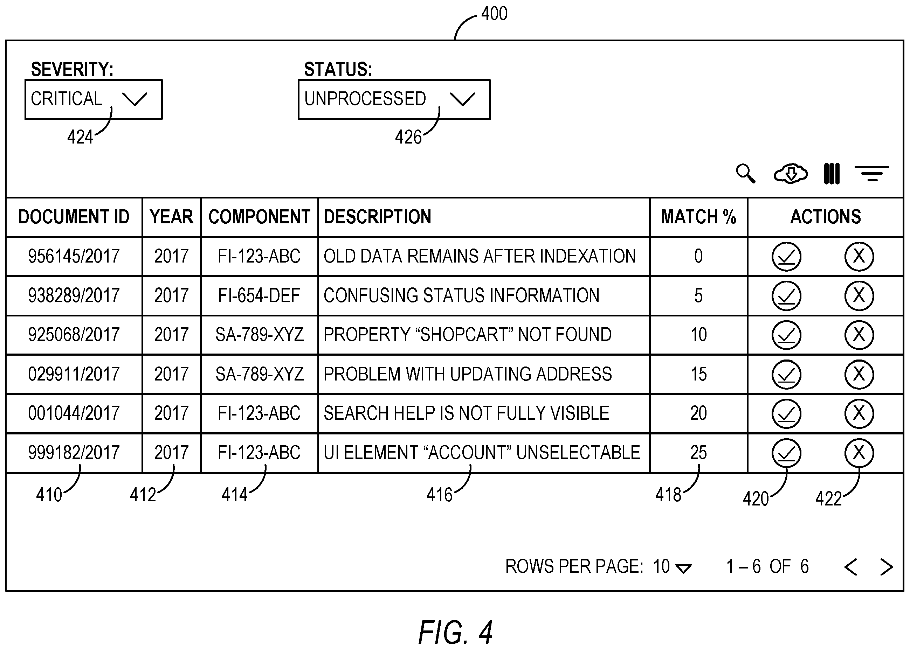

FIG. 4 illustrates an example user interface 400 in which identifications of a subset of decision-making documents are displayed. In the user interface 400, identifications 410 of the subset of the decision-making documents are displayed. Additional information may also be displayed along with the identifications 410, including, but not limited to, a year 412 that the decision-making document was created, a component 414 to which the decision-making document corresponds, a description 416 of an incident for which the document was created, and a level of similarity 418 (e.g., a match percentage) for the document.

In some example embodiments, the user interface 400 may also display a first selectable user interface element 420 and a second selectable user interface element 422 to be displayed in association with each one of the identifications 410 of the subset of the decision-making documents. The first selectable user interface element 420 may be configured to, in response to its selection, cause the decision-making document corresponding to the first selectable user interface element to be converted into a knowledge base document and stored in the database 230. The second selectable user interface element 422 may be configured to, in response to its selection, cause the decision-making document corresponding to the second selectable user interface element 422 to be deleted from the database 230.

The user interface 400 may also comprise a selectable user interface element 424 (e.g., a drop-down menu) configured to enable the user of the computing device 240 to specify which decision-making documents are to be displayed in the user interface 400 based on a level of severity. The level of severity may correspond to a level of uniqueness of the decision-making documents to be displayed in the user interface 400. For example, the user may select to display decision-making documents having a critical level of severity, such as decision-making documents having a highest level of similarity between 0-35% in order to include decision-making documents for which review is critical since they are highly unique. Alternatively, the user may select to display decision-making documents having a moderate level of severity, such as decision-making documents having a highest level of similarity between 35-55% in order to include decision-making documents for which review is of moderate importance since they are moderately unique. These percentage ranges for the level of similarity may be customizable by the user. For example, the user may specify the different ranges for levels of similarity for each level of severity (e.g., critical, moderate, low). Additionally, the user may customize the different ranges depending on the inflow of incidents and the existing corpus of documents, as they may vary, particularly from one IT component to another IT component.

The user interface 400 may also include a selectable user interface element 426 (e.g., a drop-down menu) configured to enable the user of the computing device 240 to specify which decision-making documents are to be displayed in the user interface 400 based on their status, such as whether they have been processed. For example, the user may use the selectable user interface element 426 to instruct the machine learning component 210 to only display a list of documents for which a decision of whether to convert or delete has not yet been made.

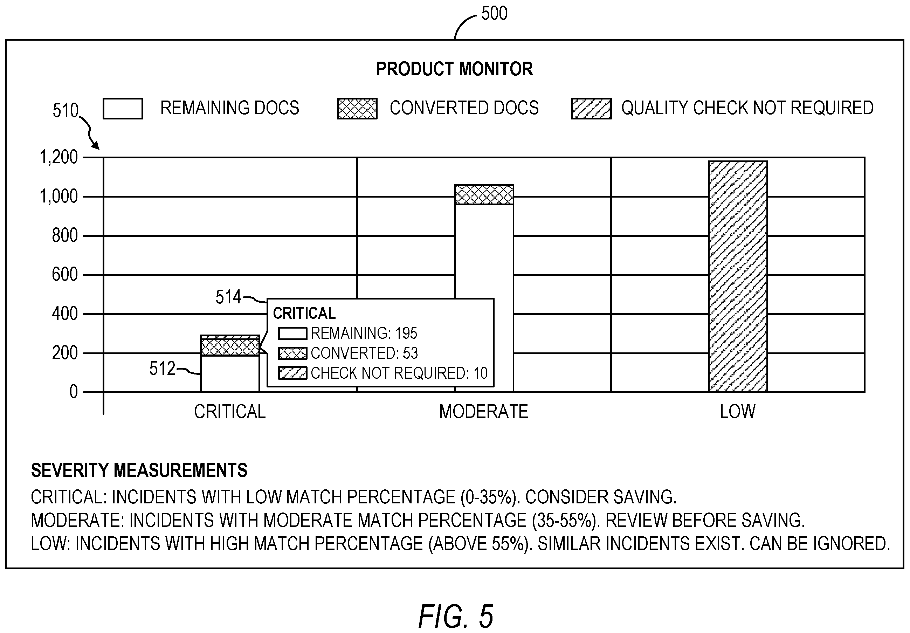

The machine learning component 210 may also be configured to display an analytical dashboard for product owners or managers to derive the right action over an existing backlog of documents. FIG. 5 illustrates an example user interface 500 in which analytics 510 for the handling of incident documents for a specific product are displayed. In the example shown in FIG. 5, analytics 510 include the overall progress of documents handled in each topic area or team. The progress may be visualized as a bar graph with corresponding bar graph elements 512 representing the number of documents remaining to be decided on, the number of documents that have been converted, and the number of documents for which a decision is not required. The analytics 510 may be categorized based on different levels of severity (e.g., different match percentage ranges). In some example embodiments, each bar graph element 512 may comprise a selectable user interface element that is configured to trigger, in response to its selection, display of a user interface element 514 that includes numerical data detailing the number of documents remaining to be decided on, the number of documents that have been converted, and the number of documents for which a decision is not required.

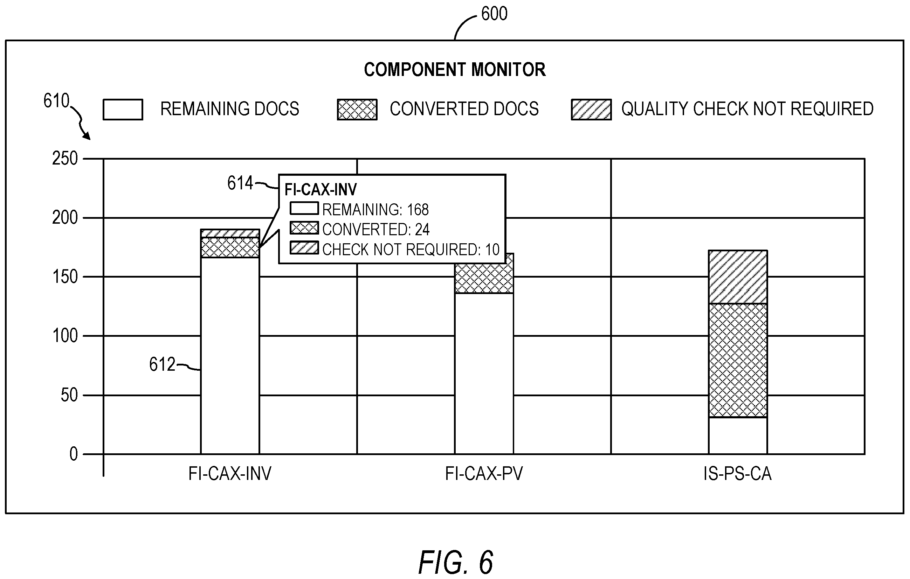

FIG. 6 illustrates an example user interface 600 in which analytics 610 for the handling of incident documents are displayed at a component level. The user interface 600 may be configured to help a user track documents at a component level and identify a volume of documents and its status. The analytics 610 may be visualized as a bar graph with corresponding bar graph elements 612 representing the number of documents remaining to be decided on, the number of documents that have been converted, and the number of documents for which a decision is not required. The analytics 610 may be categorized based on the different components to which the documents correspond. In some example embodiments, each bar graph element 612 may comprise a selectable user interface element that is configured to trigger, in response to its selection, display of a user interface element 614 that includes numerical data detailing the number of documents remaining to be decided on, the number of documents that have been converted, and the number of documents for which a decision is not required.

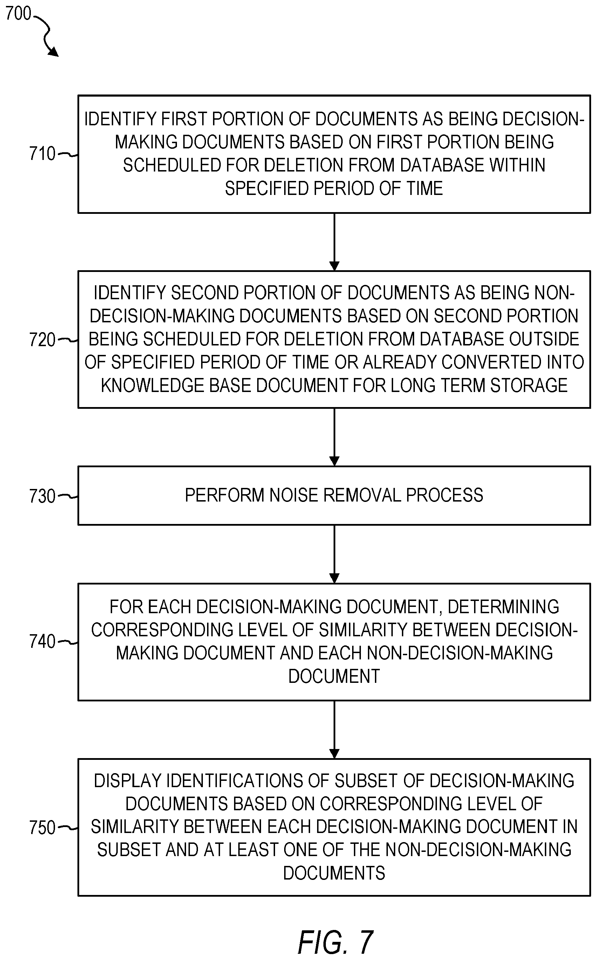

FIG. 7 is a flowchart illustrating an example method 700 of implementing smart document retention. The method 700 can be performed by processing logic that can comprise hardware (e.g., circuitry, dedicated logic, programmable logic, microcode, etc.), software (e.g., instructions run on a processing device), or a combination thereof. In one example embodiment, one or more of the operations of the method 700 are performed by the retention system 200 of FIG. 2 or any combination of one or more of its components (e.g., the machine learning component 210, the noise removal component 220).

At operation 710, the retention system 200 may identify a first portion of a plurality of documents as being decision-making documents based on each document in the first portion of the plurality of documents being scheduled for deletion from a database within a specified period of time. For example, the retention system 200 may access metadata of the document, which may be stored in the database(s) 230 in association with the document, to determine when the document is scheduled for deletion. The metadata may comprise the actual scheduled deletion date or a date that the document was created, which may be used to calculate the scheduled deletion date. If the specified period of time is one month, then the retention system 200 may identify documents scheduled to be deleted within one month as being decision-making documents. Each one of the plurality of documents may correspond to a customer service ticket created for an incident involving an information technology service. Furthermore, each one of the plurality of documents may comprise information used to resolve the incident.

The retention system 200 may then, at operation 720, identify a second portion of the plurality of documents as being non-decision-making documents based on each document in the second portion of the plurality of documents either being scheduled for deletion from the database outside of the specified period of time or having been converted into a knowledge base document and stored in the database. Referring back to the example provided above with respect to operation 710, if the specified period of time is one month, then the retention system 200 may identify documents scheduled to be deleted in more than one month as being non-decision-making documents.

Next, the retention system 200 may perform a noise removal process, at operation 730. The noise removal process may comprise, for each document in the plurality of documents, extracting document text from the document, dividing the document text into document sentences, and computing a corresponding sentence embedding for each one of the document sentences of the document. The noise removal process may further comprise, for each document sentence of each document in the plurality of documents, computing a corresponding similarity measurement between the sentence embedding of the document sentence and each noise embedding in a plurality of noise embeddings. The plurality of noise embeddings may correspond to a plurality of reference sentences that have been identified as noise. The noise removal process may also comprise, for each document in the plurality of documents, identifying corresponding knowledge text by removing one or more document sentences of the document from the document text of the document based on the one or more document sentences having a corresponding similarity measurement that is above a threshold value.

At operation 740, the retention system 200 may for each one of the decision-making documents, determine a corresponding level of similarity between the decision-making document and each one of the non-decision-making documents. The determining of the corresponding level of similarity between the decision-making document and each one of the non-decision-making documents may comprise determining a corresponding level of similarity between the knowledge text of the decision-making document and the knowledge text of each one of the non-decision-making documents. The determining of the corresponding level of similarity between the decision-making document and each one of the non-decision-making documents may additionally or alternatively comprise computing a cosine similarity between a corresponding embedding of the decision-making document and a corresponding embedding of each one of the non-decision-making documents.

Next, the retention system 200 may, at operation 750, cause identifications of a subset of the decision-making documents to be displayed on a computing device based on the corresponding level of similarity between each decision-making document in the subset and at least one of the non-decision-making documents. The displaying of the identifications of the subset of the decision-making documents may additionally or alternatively be based on the corresponding level of similarity between each decision-making document in the subset and each of the other remaining decision-making documents. The causing of the identifications of the subset of the decision-making documents to be displayed may comprise causing a first selectable user interface element and a second selectable user interface element to be displayed in association with each one of the identifications of the subset of the decision-making documents. The first selectable user interface element may be configured to, in response to its selection, cause the decision-making document corresponding to the first selectable user interface element to be converted into a knowledge base document and stored in the database. The second selectable user interface element may be configured to, in response to its selection, cause the decision-making document corresponding to the second selectable user interface element to be deleted from the database.

It is contemplated that any of the other features described within the present disclosure can be incorporated into the method 700.

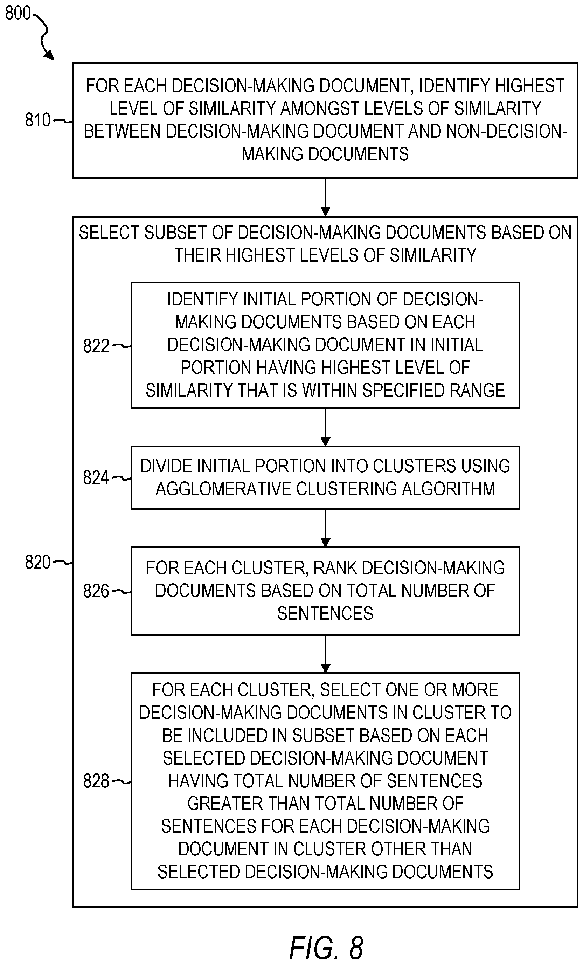

FIG. 8 is a flowchart illustrating an example method 800 of causing an identification of a subset of decision-making documents to be displayed on a computing device. The method 800 can be performed by processing logic that can comprise hardware (e.g., circuitry, dedicated logic, programmable logic, microcode, etc.), software (e.g., instructions run on a processing device), or a combination thereof. In one example embodiment, one or more of the operations of the method 800 are performed by the retention system 200 of FIG. 2 or any combination of one or more of its components (e.g., the machine learning component 210). The method 800 may be performed as part of operation 750 of the method 700 in FIG. 7

At operation 810, the retention system 200 may, for each one of the decision-making documents, identify a highest level of similarity amongst the levels of similarity between the decision-making document and the non-decision-making documents. For example, referring back to FIG. 3, the decision-making document DMD1 has a level of similarity of 0% with non-decision-making document NDMD1, a level of similarity of 11% with non-decision-making document NDMD2, a level of similarity of 3% with non-decision-making document NDMD3, and a level of similarity of 8% with non-decision-making document NDMD4. In this example, the highest level of similarity for decision-making document DMD 1 is 11%, so 11% would be used as the highest level of similarity for decision-making document DMD1 in subsequent operations.

Next, the retention system 200 may, at operation 820, select the subset of the decision-making documents based on their highest levels of similarity. The selecting of the subset of the decision-making documents to be displayed may comprise operations 822, 824, 826, and 828. At operation 822, the retention system 200 may, identify an initial portion of the decision-making documents based on each decision-making document in the initial portion of the decision-making documents having a corresponding highest level of similarity that is within a specified range. The retention system 200 may then, at operation 824, divide the initial portion of the decision-making documents into a plurality of clusters using an agglomerative clustering algorithm. Next, the retention system 200 may, for each cluster in the plurality of clusters, rank the decision-making documents in the cluster based on a corresponding total number of sentences for each one of the decision-making documents in the cluster, at operation 826. At operation 828, the retention system 200 may, for each cluster in the plurality of clusters, select one or more decision-making documents in the cluster to be included in the subset based on each one of the selected one or more decision-making documents having a total number of sentences greater than a corresponding total number of sentences for each decision-making document in the cluster other than the selected one or more decision-making documents.

It is contemplated that any of the other features described within the present disclosure can be incorporated into the method 800.

In view of the disclosure above, various examples are set forth below. It should be noted that one or more features of an example, taken in isolation or combination, should be considered within the disclosure of this application.

Example 1 includes a computer-implemented method performed by a computer system having a memory and at least one hardware processor, the computer-implemented method comprising: identifying a first portion of a plurality of documents as being decision-making documents based on each document in the first portion of the plurality of documents being scheduled for deletion from a database within a specified period of time; identifying a second portion of the plurality of documents as being non-decision-making documents based on each document in the second portion of the plurality of documents being scheduled for deletion from the database outside of the specified period of time; for each one of the decision-making documents, determining a corresponding level of similarity between the decision-making document and each one of the non-decision-making documents; and causing identifications of a subset of the decision-making documents to be displayed on a computing device based on the corresponding level of similarity between each decision-making document in the subset and at least one of the non-decision-making documents.

Example 2 includes the computer-implemented method of example 1, wherein each one of the plurality of documents corresponds to a customer service ticket created for an incident involving an information technology service and comprises information used to resolve the incident.

Example 3 includes the computer-implemented method of example 1 or example 2, further comprising performing a noise removal process prior to the determining of the corresponding level of similarity for each one of the decision-making documents, the noise removal process comprising: for each document in the plurality of documents, extracting document text from the document; for each document in the plurality of documents, dividing the document text into document sentences; for each document in the plurality of documents, computing a corresponding sentence embedding for each one of the document sentences of the document; for each document sentence of each document in the plurality of documents, computing a corresponding similarity measurement between the sentence embedding of the document sentence and each noise embedding in a plurality of noise embeddings, the plurality of noise embeddings corresponding to a plurality of reference sentences that have been identified as noise; and for each document in the plurality of documents, identifying corresponding knowledge text by removing one or more document sentences of the document from the document text of the document based on the one or more document sentences having a corresponding similarity measurement that is above a threshold value, wherein the determining of the corresponding level of similarity between the decision-making document and each one of the non-decision-making documents comprises determining a corresponding level of similarity between the knowledge text of the decision-making document and the knowledge text of each one of the non-decision-making documents.

Example 4 includes the computer-implemented method of any one of examples 1 to 3, wherein the determining of the corresponding level of similarity between the decision-making document and each one of the non-decision-making documents comprises computing a cosine similarity between a corresponding embedding of the decision-making document and a corresponding embedding of each one of the non-decision-making documents.

Example 5 includes the computer-implemented method of any one of examples 1 to 4, wherein the causing of the identification of the subset of the decision-making documents to be displayed comprises: for each one of the decision-making documents, identifying a highest level of similarity amongst the levels of similarity between the decision-making document and the non-decision-making documents; and selecting the subset of the decision-making documents based on their highest levels of similarity.

Example 6 includes the computer-implemented method of any one of examples 1 to 5, wherein the selecting of the subset of the decision-making documents to be displayed comprises: identifying an initial portion of the decision-making documents based on each decision-making document in the initial portion of the decision-making documents having a corresponding highest level of similarity that is within a specified range; dividing the initial portion of the decision-making documents into a plurality of clusters using an agglomerative clustering algorithm; for each cluster in the plurality of clusters, ranking the decision-making documents in the cluster based on a corresponding total number of sentences for each one of the decision-making documents in the cluster; and for each cluster in the plurality of clusters, selecting one or more decision-making documents in the cluster to be included in the subset based on each one of the selected one or more decision-making documents having a total number of sentences greater than a corresponding total number of sentences for each decision-making document in the cluster other than the selected one or more decision-making documents.

Example 7 includes the computer-implemented method of any one of examples 1 to 6, wherein: the causing of the identifications of the subset of the decision-making documents to be displayed comprises causing a first selectable user interface element and a second selectable user interface element to be displayed in association with each one of the identifications of the subset of the decision-making documents; the first selectable user interface element being configured to, in response to its selection, cause the decision-making document corresponding to the first selectable user interface element to be converted into a knowledge base document and stored in the database; and the second selectable user interface element being configured to, in response to its selection, cause the decision-making document corresponding to the second selectable user interface element to be deleted from the database.

Example 8 includes a system comprising: at least one processor; and a non-transitory computer-readable medium storing executable instructions that, when executed, cause the at least one processor to perform the method of any one of examples 1 to 7.

Example 9 includes a non-transitory machine-readable storage medium, tangibly embodying a set of instructions that, when executed by at least one processor, causes the at least one processor to perform the method of any one of examples 1 to 7.

Example 10 includes a machine-readable medium carrying a set of instructions that, when executed by at least one processor, causes the at least one processor to carry out the method of any one of examples 1 to 7.

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client, or server computer system) or one or more hardware modules of a computer system (e.g., a processor or a group of processors) may be configured by software (e.g., an application or application portion) as a hardware module that operates to perform certain operations as described herein.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the network 114 of FIG. 1) and via one or more appropriate interfaces (e.g., APIs).

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry (e.g., a FPGA or an ASIC).

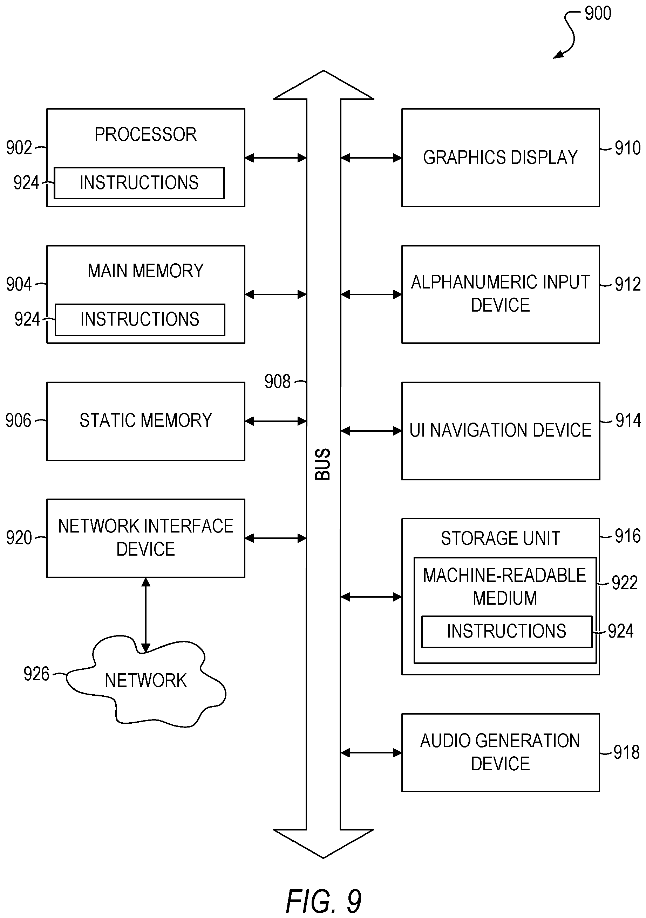

FIG. 9 is a block diagram of a machine in the example form of a computer system 900 within which instructions 924 for causing the machine to perform any one or more of the methodologies discussed herein may be executed. In alternative embodiments, the machine operates as a standalone device or may be connected (e.g., networked) to other machines. In a networked deployment, the machine may operate in the capacity of a server or a client machine in a serverclient network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 900 includes a processor 902 (e.g., a central processing unit (CPU), a graphics processing unit (GPU) or both), a main memory 904, and a static memory 906, which communicate with each other via a bus 908. The computer system 900 may further include a graphics or video display unit 910 (e.g., a liquid crystal display (LCD) or a cathode ray tube (CRT)). The computer system 900 also includes an alphanumeric input device 912 (e.g., a keyboard), a user interface (UI) navigation (or cursor control) device 914 (e.g., a mouse), a storage unit (e.g., a disk drive unit) 916, an audio or signal generation device 918 (e.g., a speaker), and a network interface device 920.

The storage unit 916 includes a machine-readable medium 922 on which is stored one or more sets of data structures and instructions 924 (e.g., software) embodying or utilized by any one or more of the methodologies or functions described herein. The instructions 924 may also reside, completely or at least partially, within the main memory 904 and/or within the processor 902 during execution thereof by the computer system 900, the main memory 904 and the processor 902 also constituting machine-readable media. The instructions 924 may also reside, completely or at least partially, within the static memory 906.

While the machine-readable medium 922 is shown in an example embodiment to be a single medium, the term "machine-readable medium" may include a single medium or multiple media (e.g., a centralized or distributed database, and/or associated caches and servers) that store the one or more instructions 924 or data structures. The term "machine-readable medium" shall also be taken to include any tangible medium that is capable of storing, encoding or carrying instructions for execution by the machine and that cause the machine to perform any one or more of the methodologies of the present embodiments, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and compact disc-read-only memory (CD-ROM) and digital versatile disc (or digital video disc) read-only memory (DVD-ROM) disks.

The instructions 924 may further be transmitted or received over a communications network 926 using a transmission medium. The instructions 924 may be transmitted using the network interface device 920 and any one of a number of well-known transfer protocols (e.g., HTTP). Examples of communication networks include a LAN, a WAN, the Internet, mobile telephone networks, POTS networks, and wireless data networks (e.g., WiFi and WiMAX networks). The term "transmission medium" shall be taken to include any intangible medium capable of storing, encoding, or carrying instructions for execution by the machine, and includes digital or analog communications signals or other intangible media to facilitate communication of such software.

This detailed description is merely intended to teach a person of skill in the art further details for practicing certain aspects of the present teachings and is not intended to limit the scope of the claims. Therefore, combinations of features disclosed above in the detailed description may not be necessary to practice the teachings in the broadest sense, and are instead taught merely to describe particularly representative examples of the present teachings.

Unless specifically stated otherwise, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Although an embodiment has been described with reference to specific example embodiments, it will be evident that various modifications and changes may be made to these embodiments without departing from the broader spirit and scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computer-implemented method performed by a computer system comprising a memory and at least one hardware processor, the computer-implemented method comprising:
identifying a first portion of a plurality of documents as being decision-making documents based on each document in the first portion of the plurality of documents being scheduled for deletion from a database within a specified period of time;
identifying a second portion of the plurality of documents as being non-decision-making documents based on each document in the second portion of the plurality of documents either being scheduled for deletion from the database outside of the specified period of time or having been converted into a knowledge base document and stored in the database;
for each one of the decision-making documents, determining a corresponding level of similarity between the decision-making document and each one of the non-decision-making documents; and
causing identifications of a subset of the decision-making documents to be displayed on a computing device based on the corresponding level of similarity between each decision-making document in the subset and at least one of the non-decision-making documents.

2. The computer-implemented method of claim 1, wherein each one of the plurality of documents corresponds to a customer service ticket created for an incident involving an information technology service and comprises information used to resolve the incident.

3. The computer-implemented method of claim 1 or 2, further comprising performing a noise removal process prior to the determining of the corresponding level of similarity for each one of the decision-making documents, the noise removal process comprising:
for each document in the plurality of documents, extracting document text from the document;
for each document in the plurality of documents, dividing the document text into document sentences;
for each document in the plurality of documents, computing a corresponding sentence embedding for each one of the document sentences of the document;
for each document sentence of each document in the plurality of documents, computing a corresponding similarity measurement between the sentence embedding of the document sentence and each noise embedding in a plurality of noise embeddings, the plurality of noise embeddings corresponding to a plurality of reference sentences that have been identified as noise; and
for each document in the plurality of documents, identifying corresponding knowledge text by removing one or more document sentences of the document from the document text of the document based on the one or more document sentences having a corresponding similarity measurement that is above a threshold value,
wherein the determining of the corresponding level of similarity between the decision-making document and each one of the non-decision-making documents comprises determining a corresponding level of similarity between the knowledge text of the decision-making document and the knowledge text of each one of the non-decision-making documents.

4. The computer-implemented method of any one of claims 1 to 3, wherein the determining of the corresponding level of similarity between the decision-making document and each one of the non-decision-making documents comprises computing a cosine similarity between a corresponding embedding of the decision-making document and a corresponding embedding of each one of the non-decision-making documents; and/or
wherein:
the causing of the identifications of the subset of the decision-making documents to be displayed comprises causing a first selectable user interface element and a second selectable user interface element to be displayed in association with each one of the identifications of the subset of the decision-making documents;
the first selectable user interface element being configured to, in response to its selection, cause the decision-making document corresponding to the first selectable user interface element to be converted into a knowledge base document and stored in the database; and
the second selectable user interface element being configured to, in response to its selection, cause the decision-making document corresponding to the second selectable user interface element to be deleted from the database.

5. The computer-implemented method of any one of claims 1 to 4, wherein the causing of the identification of the subset of the decision-making documents to be displayed comprises:
for each one of the decision-making documents, identifying a highest level of similarity amongst the levels of similarity between the decision-making document and the non-decision-making documents; and
selecting the subset of the decision-making documents based on their highest levels of similarity;
wherein, optionally, the selecting of the subset of the decision-making documents to be displayed comprises:
identifying an initial portion of the decision-making documents based on each decision-making document in the initial portion of the decision-making documents having a corresponding highest level of similarity that is within a specified range;
dividing the initial portion of the decision-making documents into a plurality of clusters using an agglomerative clustering algorithm;
for each cluster in the plurality of clusters, ranking the decision-making documents in the cluster based on a corresponding total number of sentences for each one of the decision-making documents in the cluster; and
for each cluster in the plurality of clusters, selecting one or more decision-making documents in the cluster to be included in the subset based on each one of the selected one or more decision-making documents having a total number of sentences greater than a corresponding total number of sentences for each decision-making document in the cluster other than the selected one or more decision-making documents.

6. A system of comprising:
at least one hardware processor; and
a non-transitory computer-readable medium storing executable instructions that, when executed, cause the at least one processor to perform computer operations comprising:
identifying a first portion of a plurality of documents as being decision-making documents based on each document in the first portion of the plurality of documents being scheduled for deletion from a database within a specified period of time;
identifying a second portion of the plurality of documents as being non-decision-making documents based on each document in the second portion of the plurality of documents either being scheduled for deletion from the database outside of the specified period of time or having been converted into a knowledge base document and stored in the database;
for each one of the decision-making documents, determining a corresponding level of similarity between the decision-making document and each one of the non-decision-making documents; and
causing identifications of a subset of the decision-making documents to be displayed on a computing device based on the corresponding level of similarity between each decision-making document in the subset and at least one of the non-decision-making documents.

7. The system of claim 6, wherein each one of the plurality of documents corresponds to a customer service ticket created for an incident involving an information technology service and comprises information used to resolve the incident.

8. The system of claim 6 or 7, wherein the computer operations further comprise performing a noise removal process prior to the determining of the corresponding level of similarity for each one of the decision-making documents, the noise removal process comprising:
for each document in the plurality of documents, extracting document text from the document;
for each document in the plurality of documents, dividing the document text into document sentences;
for each document in the plurality of documents, computing a corresponding sentence embedding for each one of the document sentences of the document;
for each document sentence of each document in the plurality of documents, computing a corresponding similarity measurement between the sentence embedding of the document sentence and each noise embedding in a plurality of noise embeddings, the plurality of noise embeddings corresponding to a plurality of reference sentences that have been identified as noise; and
for each document in the plurality of documents, identifying corresponding knowledge text by removing one or more document sentences of the document from the document text of the document based on the one or more document sentences having a corresponding similarity measurement that is above a threshold value,
wherein the determining of the corresponding level of similarity between the decision-making document and each one of the non-decision-making documents comprises determining a corresponding level of similarity between the knowledge text of the decision-making document and the knowledge text of each one of the non-decision-making documents.

9. The system of any one of claims 6 to 8, wherein the determining of the corresponding level of similarity between the decision-making document and each one of the non-decision-making documents comprises computing a cosine similarity between a corresponding embedding of the decision-making document and a corresponding embedding of each one of the non-decision-making documents; and/or
wherein:
the causing of the identifications of the subset of the decision-making documents to be displayed comprises causing a first selectable user interface element and a second selectable user interface element to be displayed in association with each one of the identifications of the subset of the decision-making documents;
the first selectable user interface element being configured to, in response to its selection, cause the decision-making document corresponding to the first selectable user interface element to be converted into a knowledge base document and stored in the database; and
the second selectable user interface element being configured to, in response to its selection, cause the decision-making document corresponding to the second selectable user interface element to be deleted from the database.

10. The system of any one of claims 6 to 9, wherein the causing of the identification of the subset of the decision-making documents to be displayed comprises:
for each one of the decision-making documents, identifying a highest level of similarity amongst the levels of similarity between the decision-making document and the non-decision-making documents; and
selecting the subset of the decision-making documents based on their highest levels of similarity;
wherein, optionally, the selecting of the subset of the decision-making documents to be displayed comprises:
identifying an initial portion of the decision-making documents based on each decision-making document in the initial portion of the decision-making documents having a corresponding highest level of similarity that is within a specified range;
dividing the initial portion of the decision-making documents into a plurality of clusters using an agglomerative clustering algorithm;
for each cluster in the plurality of clusters, ranking the decision-making documents in the cluster based on a corresponding total number of sentences for each one of the decision-making documents in the cluster; and
for each cluster in the plurality of clusters, selecting one or more decision-making documents in the cluster to be included in the subset based on each one of the selected one or more decision-making documents having a total number of sentences greater than a corresponding total number of sentences for each decision-making document in the cluster other than the selected one or more decision-making documents.

11. A non-transitory machine-readable storage medium tangibly embodying a set of instructions that, when executed by at least one hardware processor, causes the at least one processor to perform computer operations comprising:
identifying a first portion of a plurality of documents as being decision-making documents based on each document in the first portion of the plurality of documents being scheduled for deletion from a database within a specified period of time;
identifying a second portion of the plurality of documents as being non-decision-making documents based on each document in the second portion of the plurality of documents either being scheduled for deletion from the database outside of the specified period of time or having been converted into a knowledge base document and stored in the database;
for each one of the decision-making documents, determining a corresponding level of similarity between the decision-making document and each one of the non-decision-making documents; and
causing identifications of a subset of the decision-making documents to be displayed on a computing device based on the corresponding level of similarity between each decision-making document in the subset and at least one of the non-decision-making documents.

12. The non-transitory machine-readable storage medium of claim 11, wherein each one of the plurality of documents corresponds to a customer service ticket created for an incident involving an information technology service and comprises information used to resolve the incident.

13. The non-transitory machine-readable storage medium of claim 11 or 12, wherein the computer operations further comprise performing a noise removal process prior to the determining of the corresponding level of similarity for each one of the decision-making documents, the noise removal process comprising:
for each document in the plurality of documents, extracting document text from the document;
for each document in the plurality of documents, dividing the document text into document sentences;
for each document in the plurality of documents, computing a corresponding sentence embedding for each one of the document sentences of the document;
for each document sentence of each document in the plurality of documents, computing a corresponding similarity measurement between the sentence embedding of the document sentence and each noise embedding in a plurality of noise embeddings, the plurality of noise embeddings corresponding to a plurality of reference sentences that have been identified as noise; and
for each document in the plurality of documents, identifying corresponding knowledge text by removing one or more document sentences of the document from the document text of the document based on the one or more document sentences having a corresponding similarity measurement that is above a threshold value,
wherein the determining of the corresponding level of similarity between the decision-making document and each one of the non-decision-making documents comprises determining a corresponding level of similarity between the knowledge text of the decision-making document and the knowledge text of each one of the non-decision-making documents.

14. The non-transitory machine-readable storage medium of any one of claims 11 to 13, wherein the determining of the corresponding level of similarity between the decision-making document and each one of the non-decision-making documents comprises computing a cosine similarity between a corresponding embedding of the decision-making document and a corresponding embedding of each one of the non-decision-making documents; and/or
wherein:
the causing of the identifications of the subset of the decision-making documents to be displayed comprises causing a first selectable user interface element and a second selectable user interface element to be displayed in association with each one of the identifications of the subset of the decision-making documents;
the first selectable user interface element being configured to, in response to its selection, cause the decision-making document corresponding to the first selectable user interface element to be converted into a knowledge base document and stored in the database; and
the second selectable user interface element being configured to, in response to its selection, cause the decision-making document corresponding to the second selectable user interface element to be deleted from the database.

15. The non-transitory machine-readable storage medium of any one of claims 11 to 14, wherein the causing of the identification of the subset of the decision-making documents to be displayed comprises:
for each one of the decision-making documents, identifying a highest level of similarity amongst the levels of similarity between the decision-making document and the non-decision-making documents; and
selecting the subset of the decision-making documents based on their highest levels of similarity;
wherein, optionally, the selecting of the subset of the decision-making documents to be displayed comprises:
identifying an initial portion of the decision-making documents based on each decision-making document in the initial portion of the decision-making documents having a corresponding highest level of similarity that is within a specified range;
dividing the initial portion of the decision-making documents into a plurality of clusters using an agglomerative clustering algorithm;
for each cluster in the plurality of clusters, ranking the decision-making documents in the cluster based on a corresponding total number of sentences for each one of the decision-making documents in the cluster; and
for each cluster in the plurality of clusters, selecting one or more decision-making documents in the cluster to be included in the subset based on each one of the selected one or more decision-making documents having a total number of sentences greater than a corresponding total number of sentences for each decision-making document in the cluster other than the selected one or more decision-making documents.
